# EUROPÄISCHE PATENTANMELDUNG

(11) **EP 1 632 774 A2**
(43) Veröffentlichungstag der Anmeldung: **08.03.2006**
(21) Anmeldenummer: 05017926.6
(22) Anmeldetag: 18.08.2005
(51) Int. Cl.: G01N 29/22

(54) **Vorrichtung zur zerstörungsfreien Prüfung von Bauteilen mittels Ultraschallwellen**

(30) Priorität: 01.09.2004 DE 102004043180
(71) Anmelder: Fraunhofer-Gesellschaft zur Förderung der angewandten Forschung e.V., 80686 München (DE)
(72) Erfinder: Kühnicke, Horst, Dr. rer. nat. habil., 01324 Dresden (DE)
(74) Vertreter: Pfenning, Meinig & Partner GbR

(57) **Zusammenfassung**

Die Erfindung betrifft eine Vorrichtung zur Ultraschallprüfung, die bevorzugt zur zerstörungsfreien Prüfung von Körpern, z.B. Bauteilen mittels Ultraschallwellen, die universell für die Prüfung von verschiedenartigen Körpern/Bauteilen eingesetzt werden kann. Es ist Aufgabe der Erfindung eine zerstörungsfreie Prüfung von Körpern mittels Ultraschallwellen kostengünstig durchführen zu können und gleichzeitig Möglichkeiten für einen flexiblen Einsatz an unterschiedlichst gestalteten und dimensionierten Körpern zu erreichen. Die erfindungsgemäße Vorrichtung ist dabei so ausgebildet, dass ein Ultraschallwellensende- und -empfangselement in einem auf die Oberfläche eines Körpers aufsetzbaren Prüfkopf aufgenommen ist. Das Ultraschallwellensende- und -empfangselement und/oder ein einen emittierten Strahl von Ultraschallwellen reflektierendes, fokussierendes und/oder ablenkendes akustisches Element und mittels mindestens eines Aktuators um mindestens eine Rotationsachse verschwenkt - und/oder entlang mindestens einer Achse translatorisch verschiebbar.

## Beschreibung

Die Erfindung betrifft eine Vorrichtung zur Ultraschallprüfung, die bevorzugt zur zerstörungsfreien Prüfung von Körpern, z.B. Bauteilen mittels Ultraschallwellen, die universell für die Prüfung von verschiedenartigen Körpern/Bauteilen eingesetzt werden kann. Dabei ist z.B. eine Detektion von Defekten aber auch Werkstoffinhomogenitäten sowie eine Erkennung von Positionen von Grenzschichten innerhalb solcher Körper/Bauteile möglich. Der Einsatz kann insbesondere vorteilhaft bei großvolumigen Körpern/Bauteilen erfolgen. So sind z.B. Anwendungen zur Qualitätssicherung in den Industriezweigen Luft- und Raumfahrt, Fahrzeugbau, Metallurgie, Maschinen- und Anlagenbau, Elektrotechnik und Elektronik möglich.

Nach dem Stand der Technik werden für großvolumige und dickwandige Bauteile bei der zerstörungsfreien Prüfung Komplexe Systeme eingesetzt, mit denen Ultraschallwellen sowohl mit vorgegebenen Einschallwinkeln, als auch Strahlen von Ultraschallwellen mit vorgegebenem Fokuspunkt innerhalb von Bauteilen eingesetzt. Um eine Detektion mit verschiedenen Einschallwinkeln und verschiedene Positionen von Fokuspunkten innerhalb eines Bauteils realisieren zu können, müssen entweder mehrere unterschiedlich ausgebildete so genannte Ultraschallprüfköpfe für ein Bauteil eingesetzt werden, wodurch sich nicht nur die Kosten für die Beschaffung solcher Ultraschallköpfe nachteilig auswirken, sondern auch der für eine zerstörungsfreie Prüfung an Bauteilen erforderliche Zeitaufwand entsprechend erhöht ist.

In einer anderen Alternative sind Systeme, die als "Gruppenstrahler" bezeichnet werden, für die zerstörungsfreie Prüfung einsetzbar. Mit diesen Systemen ist eine dreidimensionale Detektion innerhalb von Bauteilen möglich. Sie können automatisiert in Bezug zum jeweiligen Bauteil positioniert werden und eine Relativbewegung entlang der Oberfläche von Bauteilen durchführen, so dass der Zeitaufwand für eine zerstörungsfreie Prüfung gegen dem vorab erwähnten Einsatz mehrerer Ultraschallprüfköpfe reduziert werden kann.

Die Gruppenstrahler nutzen eine phasenversetzte Ansteuerung eines in einzelne Elemente unterteilten Ultraschallsende- und -empfangselementes. Dabei können mit den einzelnen Elementen unterschiedliche Einschallwinkel und Fokuspunktpositionen realisiert werden. Dabei werden die einzelnen Elemente zeitdiskret und sukzessive aktiviert und dementsprechend auch die Detektion in dieser Form durchgeführt.

Für die Aktivierung der einzelnen Elemente sind jeweils diesen zugeordnete Piezowandler vorhanden, die dann mit einzelnen Hochspannungsimpulsen aktiviert werden. Dabei bereiten insbesondere die erforderlichen hohen Spannungen mit den entsprechenden Frequenzen, die im Megaherzbereich liegen, erhebliche Probleme. Es sind eine entsprechend hohe Anzahl von Hochspannungs-Hochfrequenz-Verbindungsleitungen zu den jeweiligen Piezoaktuatoren erforderlich, wobei bereits die elektrische Kontaktierung der Hochspannungs-Hochfrequenz-Verbin-dungsleitungen mit den Piezoaktuatoren aufwendig ist. Außerdem ist ein erhöhter Aufwand für die elektronische Ansteuerung zu verzeichnen.

Es ist daher Aufgabe der Erfindung Möglichkeiten vorzugeben, mit denen eine zerstörungsfreie Prüfung von Körpern mittels Ultraschallwellen kostengünstig erreichbar ist und auch Möglichkeiten für einen flexiblen Einsatz an unterschiedlichst gestalteten und dimensionierten Körpern erreichbar sind.

Erfindungsgemäß wird diese Aufgabe mit einer Vorrichtung, die die Merkmale des Anspruchs 1 aufweist, gelöst. Vorteilhafte Ausgestaltungsformen und Weiterbildungen der Erfindung können mit den in den untergeordneten Ansprüchen bezeichneten Merkmalen erreicht werden.

Die erfindungsgemäße Vorrichtung ist dabei so ausgebildet, dass in einem auf die Oberfläche eines Bauteiles aufsetzbaren Prüfkopf ein Ultraschallwellensende- und -empfangselement aufgenommen ist. Vom Ultraschallwellensende- und -empfangselement werden Ultraschallwellen als im Wesentlichen kollimierter Strahl, der eine möglichst geringe Divergenz aufweisen sollte, emittiert und auf die Oberfläche des Körpers gerichtet ist. Durch mechatronische Stellglieder kann mit hohen Schussfolgefrequenzen bis ca. 1 kHz, zumindest mit 750 Hz gearbeitet werden. Hierbei wirkt sich das geringe Volumen und die Masse des Prüfkopfes sowie der jeweils zu bewegenden bzw. verschwenkenden einzelnen Elemente auf die erreichbare stark reduzierte Prüfzeit für ein Bauteil vorteilhaft sein.

So kann eine Prüfung innerhalb eines Zeitraumes kleiner als 100 ms mit ausreichender Detektionsgenauigkeit durchgeführt werden.

Das gesamte Volumen eines Prüfkopfes kann kleiner als 2 cm³ sein.

Zur gezielten Veränderung bzw. Beeinflussung von differenziert vorgebbaren Einschallwinkeln und/oder der Position des jeweiligen Fokuspunktes eines Ultraschallwellenstrahles ist an der erfindungsgemäßen Vorrichtung ein Aktuator vorgesehen.

Ein solcher Aktuator kann unmittelbar am Ultraschallwellensende- und -empfangselement angreifen und an diesem eine Bewegung hervorrufen. Dabei kann das Ultraschallsende- und -empfangselement um mindestens eine Rotationsachse verschwenkt werden, so dass unterschiedliche Einschallwinkel eingestellt und eine Detektion bei unterschiedlichen Einschallwinkeln durchgeführt werden kann. Allein oder zusätzlich kann mit mindestens einem Aktuator, aber auch eine translatorische Bewegung entlang mindestens einer Achse des Ultraschallwellensende- und -empfangselementes, durch dessen entsprechende Verschiebung erreicht werden.

In einer zweiten erfindungsgemäßen alternativen Ausgestaltungsform kann innerhalb des Prüfkopfes auch ein zusätzliches akustisches Element angeordnet sein, mit dem emittierte und reflektierte Ultraschallwellen in ihrer Strahlführung und Strahlformung durch entsprechende Reflexion, Fokussierung und/oder Ablenkung beeinflusst werden.

Ein solches akustisches Element ist dabei im Strahlengang der Ultraschallwellen zwischen der jeweiligen Bauteiloberfläche und dem Ultraschallwellensende- und -empfangselement so angeordnet, dass die emittierten und reflektierten Ultraschallwellen auf ein solches akustisches Element auftreffen und an einer Oberfläche des akustischen Elementes reflektiert oder auch an Grenzflächen von akustischen Elementen bei deren Durchdringung gebrochen werden.

So kann beispielsweise durch eine Verschwenkung um mindestens eine Rotationsachse eines reflektierenden akustischen Elementes eine definierte Beeinflussung verschiedener Einschallwinkel erreicht werden, da so die Ein- und Ausfallswinkel der emittierten und auch rückreflektierten Ultraschallwellen verändert werden können.

In einfachster Form kann ein solches reflektierendes akustisches Element eine planare Oberfläche aufweisen.

Es besteht aber auch die Möglichkeit, solche akustischen Elemente mit einer konkav gewölbten Oberfläche einzusetzen, so dass zusätzlich zur Reflexion auch eine Fokussierung von Ultraschallwellen in das Innere des jeweiligen Bauteils erreicht werden kann.

Bei einer konkav gewölbten Oberfläche solcher akustischen Elemente kann es insbesondere vorteilhaft sein, eine asphärische Wölbung der jeweiligen Oberfläche vorzusehen, wenn diese akustischen Elemente um mindestens eine Rotationsachse mittels eines Aktuators verschwenkt werden können. Dadurch kann die Entfernung des Fokuspunktes der vom Ultraschallsende- und -empfangselement emittierten Ultraschallwellen auch bei unterschiedlichen Einschallwinkeln verändert bzw. auch konstant gehalten werden.

Solche, eine gewölbte Oberfläche aufweisenden reflektierenden akustischen Elemente, können aber auch translatorisch entlang einer Achse verschoben werden, wodurch eine gezielte Veränderung der jeweiligen Position des Fokuspunktes erreicht werden kann.

Es können aber auch akustische Elemente mit einem Aktuator, der an diesen angreift, eingesetzt werden, bei denen die jeweiligen Ultraschallwellen, bei deren Durchdringung an den jeweiligen Grenzflächen gebrochen werden, eingesetzt werden. Dies sind beispielsweise so genannte akustische Linsen oder auch akustische Prismen.

Mit akustischen Linsen kann durch eine entsprechende translatorische Verschiebung die Position des Fokuspunktes, analog zu elektromagnetischer Strahlung bei optischen Linsen verändert werden.

Mit akustischen Prismen können, bei deren translatorischer Verschiebung, die dann bevorzugt orthogonal zur Ausrichtung der akustischen Achse der emittierten Ultraschallwellen erfolgen sollte, gezielt bestimmte und auch entsprechend differenzierte Einschallwinkel von Ultraschallwellen in den/das jeweilige(n) Körper/Bauteil erreicht werden.

Als Aktuatoren können besonders bevorzugt die so genannten Voice-Coil-Aktuatoren eingesetzt werden, da diese sehr kleine Zeitkonstanten aufweisen, relativ hohe Stellkräfte bzw. Momente ermöglichen und bezüglich der entsprechenden erreichbaren Wege und gegebenenfalls auch Winkel hochpräzise ansteuerbar sind, so dass eine sehr exakte Bewegung des jeweiligen Ultraschallsende- und -empfangselementes bzw. akustischen Elementes bezüglich der jeweiligen Verschiebewege und Verschwenkwinkel erreichbar ist.

Dementsprechend können Veränderungen von Einschallwinkeln oder auch der Position des jeweiligen Fokuspunktes mit einer Frequenz von ca. 1 kHz durchgeführt werden, so dass eine differenzierte Detektion mit unterschiedlichen Einschallwinkeln bzw. bei unterschiedlichen Positionen von Fokuspunkten in Zeitabständen im Bereich von ca. 1 ms durchgeführt werden können.

Solche Voice-Coil-Aktuatoren oder auch andere geeignete Aktuatoren können dabei unmittelbar an das jeweilige Ultraschallwellensende- und -empfangselement bzw. das jeweilige akustische Element angreifen. In einigen Fällen kann es aber vorteilhaft sein, eine räumliche Trennung vorzusehen und die mechanische Verbindung zwischen Aktuator und akustischem Element bzw. Ultraschallsende- und -empfangselement beispielsweise über ein Hebelelement zu realisieren, wobei eine gelenkige Verbindung vorteilhaft ist. So kann ein Hebelelement beispielsweise in Form eines Winkelhebels, der um eine Achse drehbar gelagert ist, ausgebildet sein.

Die mechanische Verbindung kann aber auch über diverse geeignete Getriebeausführungen erreicht werden.

Dabei kann mit Hebelelementen bzw. Getrieben eine Vergrößerung aber auch eine Verkleinerung erreichbarer Verschiebungswege oder auch Verschwenkwinkel in Bezug zum jeweiligen am Aktuator vorgenommenen Stellweg erreichbar sein, wobei dies sowohl linear, wie auch nichtlinear in Bezug zu jeweiligen Stellwegen des Aktuators erfolgen kann.

Eine Aktivierung des Aktuators erfolgt immer dann, wenn in bestimmten Zeiträumen keine Detektion und Anregung erfolgen soll, also der jeweilige Aktuator immer dann inaktiv ist, wenn Ultraschallwellen emittiert und rückreflektierte Ultraschallwellen detektiert werden. Demzufolge sollte eine zeitsynchrone Ansteuerung von Ultraschallwellensende- und
-empfangselement und dem Aktuator mit einer elektronischen Steuer- und Auswerteeinheit erfolgen können. Mit einer solchen elektronischen Steuer- und Auswerteeinheit kann der jeweilige Aktuator so manipuliert werden, dass ein bestimmter vorgegebener Stellweg realisiert wird, der zu einer bestimmten, um einen vorgebbaren Winkel führenden Verschwenkung oder eine Verschiebung mit einem vorgegebenen Weg des jeweiligen akustischen Elementes bzw. der Ultraschallsende- und -empfangselementes führt.

Zumindest die Detektion rückreflektierter Ultraschallwellen sollte mit Hilfe einer elektronischen Steuer- und Auswerteeinheit so erfolgen, dass nicht nur die jeweiligen Positionskoordinaten der gesamten Vorrichtung in Bezug zum jeweiligen Körper/Bauteil berücksichtigt werden, sondern auch eine Zuordnung zum jeweils gewählten Einschallwinkel oder der jeweiligen Position des Fokuspunktes für die entsprechende Einzelmessung berücksichtigt werden kann.

Es besteht auch die Möglichkeit, beispielsweise über geeignete Getriebe eine Verschwenkung bzw. Verschiebung um bzw. entlang mehr als eine Achse durchzuführen. Dieser Effekt kann aber auch bei entsprechender Lagerung von Ultraschallsende- und -empfangselement bzw. akustischem Element in zwei Achsen erreicht werden.

In diesem Fall kann es vorteilhaft sein, beistimmte ausgewählte Oberflächenbereiche eines jeweiligen akustischen Elementes, auf die Ultraschallwellen auftreffen, differenziert auszubilden. So können Oberflächenbereiche mit unterschiedlichen Neigungswinkeln oder auch mit unterschiedlicher Wölbung ausgebildet sein.

So besteht die Möglichkeit, eine Hälfte eines akustischen Elementes und die zweite Hälfte dieses akustischen Elementes entsprechend verschieden geneigt und/oder gewölbt auszubilden. Ein so ausgebildetes akustisches Element kann dann um die Achse, in der auch die jeweilige Trennlinie der beiden Hälften liegt, hin und her verschwenkt werden, so dass einmal Ultraschallwellen ausschließlich auf eine Hälfte eines so ausgebildeten akustischen Elementes auftreffen und nach einer Verschwenkung in die entgegengesetzte Richtung Ultraschallwellen dann ausschließlich auf die andere Hälfte eines solchen akustischen Elementes auftreffen. In diesen Fällen kann dann mit einem geeigneten Aktuator eine Hin- und Herverschwenkung des akustischen Elementes zwischen zwei Endstellungen erfolgen, so dass quasi eine "Umschaltung" erreichbar ist.

Ist ein solches akustisches Element dann in einer solchen Endstellung positioniert und gehalten worden, kann dann die erfindungsgemäße Verschwenkung bzw. Verschiebung erfolgen, um eine gezielte Beeinflussung des jeweiligen Einschallwinkels oder der Positionierung des Fokuspunktes für eine Einzelmessung bei der zerstörungsfreien Prüfung eines Bauteiles vornehmen zu können.

Mit den oben bezeichneten Ausführungen wird deutlich, dass eine erfindungsgemäße Vorrichtung sehr vorteilhaft und flexibel einsetzbar ist und eine zerstörungsfreie Prüfung an den verschiedenst ausgebildeten Bauteilen in universeller Form mit einer einzigen Konfiguration einer solchen Vorrichtung zerstörungsfrei geprüft werden können. Die Kosten für die Herstellung sind gegenüber herkömmlichen Standardultraschallprüfgeräten nur geringfügig erhöht, da z.B. auf herkömmliche Ultraschallsende- und -empfangselemente zurückgegriffen werden kann und eine ohnehin vorhandene elektronische Steuer- und Auswerteeinheiten nur geringfügig modifiziert werden muss.

Im Übrigen können die Effekte der herkömmlichen Gruppenstrahler mit der erfindungsgemäßen Vorrichtung ebenfalls erreicht werden, wobei jedoch ein deutlich größerer Einschallwinkelbereich von 40° bis 80° in Bezug zur Vertikalen auf der Körper-/Bauteiloberfläche abgedeckt werden kann.

Außerdem kann eine Detektion von Longitudinalwellen und auch Transversalwellen mit erhöhter Empfindlichkeit erfolgen.

Nachfolgend soll die Erfindung beispielhaft näher erläutert werden.

Dabei zeigt:

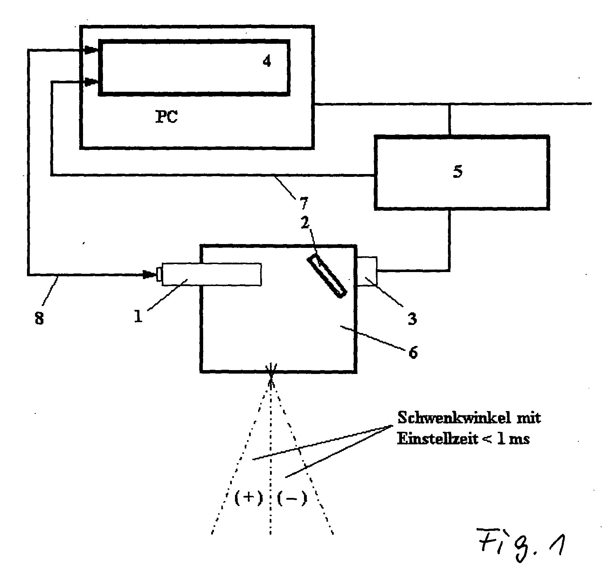

- Figur 1: in schematischer Form ein Blockschaltbild eines Beispiels einer erfindungsgemäßen Vorrichtung.

In Figur 1 ist ein Blockschaltbild einer erfindungsgemäßen in einem Beispiel gezeigt. Dabei ist ein handelsübliches Ultraschallsende- und -empfangselement 1 an einer Seite in einem Prüfkopf 6 aufgenommen, so dass Ultraschallwellen parallel zur jeweiligen Oberfläche eines hier nicht dargestellten Körpers/Bauteiles vom Ultraschallsende- und -empfangselement 1 emittiert werden können. Die vom Ultraschallsende- und -empfangselement 1 emittierten Ultraschallwellen treffen auf ein Ultraschallwellen reflektierendes akustisches Element 2, das hier als planparallele Platte ausgebildet ist, und werden von der jeweiligen Oberfläche in Richtung auf die Oberfläche des Körpers/Bauteils reflektiert. Der Raum des Prüfkopfes 6, in dem die beweglichen Elemente angeordnet sind, ist mit einer Flüssigkeit hoher akustischer Impedanz gefüllt. Eine solche Flüssigkeit kann beispielsweise ein bei Betriebs- bzw. Einsatztemperatur flüssiges Metall (z.B. Quecksilber) oder Metalllegierung sein.

So sollten mindestens die Teile des Ultraschallwellensende- und -empfangselementes die Ultraschallwellen emittieren und detektieren, mit der Flüssigkeit kontaktiert sein. Akustische Elemente können ganz in die Flüssigkeit eingetaucht sein.

Da das Ultraschallsende- und -empfangselement 1 intermittierend betrieben wird, also kurzzeitig Ultraschallwellen emittiert und im Nachgang hierzu aus dem jeweiligen Bauteil rück- und dann vom akustischen Element 2 auf das Ultraschallwellensende- und - empfangselement 1 reflektierte Ultraschallwellen detektiert werden, ist eine entsprechende zeitsynchrone Ansteuerung des Ultraschallsende- und -empfangselementes 1 von der elektronischen Steuer- und Auswerteeinheit 4 erforderlich, die über eine ebenfalls handelsübliche Verbindungsleitung 8 erfolgt.

Bei dem in Figur 1 gezeigten Beispiel soll eine Einstellung verschiedener Einschallwinkel erreicht werden können. Hierzu ist das reflektierende akustische Element 2 um eine Rotationsachse, die hier orthogonal in die Zeichnungsebene hineingerichtet ist, verschwenkbar gelagert. Die Verschwenkbarkeit des reflektierenden akustischen Elementes 2 wird mit dem Voice-Coil-Aktuator 3 erreicht, wobei gezielt vorgegebene Schwenkwinkel des reflektierenden akustischen Elementes 2 für bestimmte gewünschte Einschallwinkel eingestellt werden können.

Zur definierten Verschwenkung des reflektierenden akustischen Elementes 2 ist eine elektronische Steuerung 5, hier gesondert dargestellt, vorhanden. Diese elektronische Steuerung 5 kann aber auch integraler Bestandteil einer vollständigen elektronischen Steuer- und Auswerteeinheit sein.

Mit Hilfe der Verbindungsleitung 7 soll angedeutet werden, dass eine entsprechend geeignete zeitsynchrone Ansteuerung des Voice-Coil-Aktuators 4 über die elektronische Steuerung 5 erfolgen kann, so dass eine Verschwenkung des reflektierenden akustischen Elementes 2 immer nur zu Zeiten erfolgt, in denen keine Emission und Detektion von Ultraschallwellen mit dem Ultraschallsende- und -empfangselement 1 durchgeführt wird.

Zumindest zu Zeitpunkten, bei denen eine Detektion von rückreflektierten Ultraschallwellen aus dem jeweiligen Körper/Bauteil erfolgt, wird den jeweiligen detektierten Messsignalen auch der jeweilige Schwenkwinkel oder ein anderer proportialer Wert, wie beispielsweise der jeweilige Einschallwinkel zugeordnet, so dass dies bei der Auswertung der Messdaten mit berücksichtigt werden kann.

Anstelle des bei diesem Beispiel eingesetzten relativ einfach ausgebildeten reflektierenden akustischen Elementes 2 können aber auch akustische Elemente, wie sie im allgemeinen Teil der Beschreibung bereits erklärt worden sind, eingesetzt werden. Außerdem ist auch eine lineare translatorische Verschiebung entsprechender akustischer Elemente mit Hilfe eines Voice-Coil-Aktuators 3 möglich, wobei dies bei dem gezeigten Beispiel dann bevorzugt parallel zur Oberfläche des jeweiligen Körpers/Bauteils erfolgen sollte.

## Patentansprüche

1. Vorrichtung zur Ultraschallprüfung, bei der ein Ultraschallwellensende- und -empfangselement in einem auf die Oberfläche eines Körpers aufsetzbaren Prüfkopf aufgenommen ist,
**dadurch gekennzeichnet, dass** das Ultraschallwellensende- und -empfangselement (1) und/oder ein einen emittierten Strahl von Ultraschallwellen reflektierendes, fokussierendes und/oder ablenkendes akustisches Element (2) mittels mindestens eines Aktuators (3) um mindestens eine Rotationsachse verschwenk- und/oder entlang mindestens einer Achse translatorisch verschiebbar ist.

2. Vorrichtung nach Anspruch 1,
**dadurch gekennzeichnet, dass** das akustische Element (2) eine Ultraschallwellen reflektierende Oberfläche aufweist.

3. Vorrichtung nach Anspruch 1,
**dadurch gekennzeichnet, dass** das akustische Element (2) eine konkav gewölbte Ultraschallwellen reflektierende Oberfläche aufweist, die die Ultraschallwellen reflektiert.

4. Vorrichtung nach Anspruch 3,
**dadurch gekennzeichnet, dass** die Oberfläche asphärisch gewölbt ist.

5. Vorrichtung nach Anspruch 1,
**dadurch gekennzeichnet, dass** das akustische Element (2) eine akustische Linse oder ein akustisches Prisma ist.

6. Vorrichtung nach einem der vorhergehenden Ansprüche, **dadurch gekennzeichnet, dass** der Aktuator ein Voice-Coil-Aktuator ist.

7. Vorrichtung nach einem der vorhergehenden Ansprüche, **dadurch gekennzeichnet, dass** sie mit einer Schussfolgefrequenz größer als 750 Hz betreibbar ist.

8. Vorrichtung nach einem der vorhergehenden Ansprüche, **dadurch gekennzeichnet, dass** ein Raum innerhalb des Prüfkopfes, in dem Teile des Ultraschallwellensende- und -empfangselementes (1) aufgenommen sind, mit einer Flüssigkeit hoher akustischer Impedanz befüllt ist.

9. Vorrichtung nach einem der vorhergehenden Ansprüche, **dadurch gekennzeichnet, dass** das Ultraschallwellensende- und -empfangselement (1) und der Aktuator (3) mittels einer elektronischen Steuer- und Auswerteeinheit (4, 5) zeitsynchron ansteuerbar sind.

10. Vorrichtung nach einem der vorhergehenden Ansprüche, **dadurch gekennzeichnet, dass** Aktuator (3) und akustisches Element (2) über ein Hebelelement oder ein Getriebe miteinander verbunden sind.

11. Vorrichtung nach einem der vorhergehenden Ansprüche, **dadurch gekennzeichnet, dass** Oberflächenbereiche eines akustischen Elementes (2), auf die Ultraschallwellen auftreffen, jeweils unterschiedlich geneigt und/oder gewölbt sind.
